# EUROPÄISCHE PATENTSCHRIFT

(11) **EP 0 738 067 B1**
(45) Veröffentlichungstag und Bekanntmachung des Hinweises auf die Patenterteilung: **25.08.1999**
(21) Anmeldenummer: 96105394.9
(22) Anmeldetag: 04.04.1996
(51) Int. Cl.: H04N 1/00

(54) **Schnurloses Faksimilegerät**
Cordless facsimile apparatus
Appareil fac-similé sans fil

(30) Priorität: 15.04.1995 DE 19514194
(43) Veröffentlichungstag der Anmeldung: 16.10.1996
(73) Patentinhaber: GRUNDIG Aktiengesellschaft, 90762 Fürth (DE)
(72) Erfinder: Baurdoux, Jan, Grundig E.M.V., 90762 Fürth (DE)

(56) Entgegenhaltungen:
- EP-A- 0 450 497
- DE-A- 4 236 778
- PATENT ABSTRACTS OF JAPAN vol. 017, no. 421 (E-1409), 5.August 1993 & JP-A-05 083456 (HITACHI LTD), 2.April 1993,
- PATENT ABSTRACTS OF JAPAN vol. 011, no. 382 (E-564), 12.Dezember 1987 & JP-A-62 147859 (FUJITSU LTD), 1.Juli 1987,
- PATENT ABSTRACTS OF JAPAN vol. 018, no. 378 (E-1579), 15.Juli 1994 & JP-A-06 105116 (RICOH CO LTD), 15.April 1994,

## Beschreibung

Die Erfindung betrifft ein Verfahren zur schnurlosen Text- und Bilddatenkommunikation nach dem Oberbegriff des Anspruchs 1 und ein schnurloses Faksimilegerät zur Durchführung dieses Verfahrens nach dem Oberbegriff des Anspruchs 5.

Aus der EP 176 215 B1 ist ein schnurloses Telefon bekannt, bestehend aus einem Handapparat und einer Basisstation. Diese Einheiten sind für Duplexfunkkommunikation miteinander geeignet, wofür sie Baugruppen zum Austausch von Audiosignalen und Folgen von Sicherheitskodes während einer Gesprächsverbindung aufweisen. Die Sicherheitskodes werden dabei wiederholt in beide Richtungen im Sprachfrequenzband übertragen. Wird kein korrekt erkannter Sicherheitskode festgestellt. wird das schnurlose Telefon für den herkömmlichen Betrieb gesperrt.

Dabei ist von Nachteil daß bei der Übertragung von Bild- oder Textdaten eines Faksimilegeräts über die Funkverbindung des schnurlosen Telefons die regelmäßig übertragenen Sicherheitskodes zu Störungen bei der Wiedergabe der Übertragungsdaten führen.

Es ist daher die Aufgabe der vorliegenden Erfindung ein Faksimilegerät, das über eine Funkverbindung gemäß dem Standard für schnurlose Telefone an ein Nachrichtennetz angeschlossen ist, derart auszugestalten, daß wiederholt stattfindende Kennungsübertragungen nicht zu einer Störung bei der Wiedergabe der Faksimiledaten führen.

Diese Aufgabe wird dadurch gelöst, daß genau dann eine Kennungsübertragung erfolgt, wenn vom schnurlosen Faksimilegerät Steuerdaten übertragen werden, insbesondere nach einem Seiten-Ende und vor einem Seiten-Anfangs Signal.

Gemäß Anspruch 2 ist das erfindungsgemäße schnurlose Faksimilegerät derart ausgestaltet, daß es bei einem Seitenwechsel einen Kennungsaustausch zwischen schnurlosem Faksimilegerät und Basisstation durchführt. Die Übertragung der Bild- und Textdaten wird so lange unterbrochen, bis das schnurlose Faksimilegerät einen korrekten Kennungsaustausch mit der Basisstation durchgeführt hat.

Gemäß Anspruch 5 weist das dafür erforderliche schnurlose Faksimilegerät eine speziell ausgestaltete Steuereinheit auf, die mit einem Kennungsspeicher, der Faksimilebaugruppe und der Funkschnittstelle verbunden wird.

Vorteilhafte Ausgestaltungen sind den weiteren abhängigen Ansprüchen zu entnehmen.

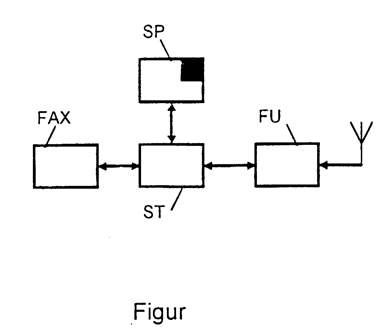

Die Erfindung wird im folgenden anhand der in der Zeichnung dargestellten Ausführungsform näher erläutert und beschrieben. Die Figur zeigt ein Blockschaltbild eines erfindungsgemäßen schnurlosen Faksimilegeräts.

Das schnurlose Faksimilegerät weist eine Baugruppe Funkschnittstelle FU auf, die über die angeschlossene Antenne Signale gemäß den Spezifikationen CT1, CT1+ oder DECT für schnurlose Telefone über Funk sendet und empfängt. Diese Baugruppe entspricht der auch bei schnurlosen Telefonen für das Senden und Empfangen von Sprachsignalen verwendeten Baugruppe.

Weiterhin ist eine Steuereinheit ST vorgesehen, die das Zusammenwirken aller anderen Baugruppen und damit das schnurlose Faksimilegerät steuert.

Es ist ein Speicher SP vorgesehen, in dem neben anderen Daten insbesondere die zwischen Basisstation und schnurlosem Faksimilegerät auszutauschende Kennung gespeichert wird.

Es ist weiterhin eine Faksimilebaugruppe FAX vorgesehen, die wie jedes herkömmliche Faksimilegerät grafische Daten einliest und weiterverarbeitet, insbesondere codiert und decodiert.

Es ist die Faksimilebaugruppe FAX über die Steuereinheit ST mit der Funkschnittstelle FU verbunden. Dadurch wird ermöglicht, daß die Steuereinheit den Datenstrom, der von der Faksimilebaugruppe FAX an die Funkschnittstelle FU und in umgekehrter Richtung geleitet wird, analysiert, Steuersignale erkennt und daraufhin einen entsprechenden Steuerbefehl an angeschlossene Baugruppen sendet.

Es wird insbesondere das Signal, welches ein Seiten-Ende der zu übertragenden Vorlage der Faksimilebaugruppe FAX signalisiert, von der Steuereinheit ST mit einem in der Steuereinheit ST integrierten Detektor für das Seiten-Ende Signal erkannt. Da nach einem Seiten-Ende Signal und noch vor einem Seiten-Anfangs Signal die übertragenen Signale nicht durch die Faksimilebaugruppe graphisch ausgegeben werden, ist der zwischen diesen beiden Signalen gelegene Zeitschlitz dafür geeignet noch weitere Steuerdaten, z.B. die Kennung, gemäß dem Standard für schnurlose Telefone zu übertragen. Da dieser Zeitschlitz eventuell zu klein ist oder in diesem Zeitschlitz bereits Daten zwischen den Faksimilebaugruppen ausgetauscht werden, wird die Faksimilebaugruppe FAX nach dem Erkennen eines Seiten-Ende Signals angehalten, um die Kennung, einschließlich eventueller Fehlersicherungscodes, zu übertragen. Durch das Anhalten der Faksimilebaugruppe FAX werden von dieser keine weiteren Daten ausgegeben.

Anschließend wird durch die Steuereinheit ST die Kennung aus dem Speicher SP ausgelesen und über die Funkschnittstelle FU ein Kennungsaustausch mit der Basisstation durchgeführt. Erst, wenn der Kennungsaustausch erfolgreich durchgeführt wurde, wird der Faksimilebaugruppe FAX durch die Steuereinheit ST signalisiert, daß wieder Daten von der Faksimilebaugruppe FAX übertragen werden dürfen. Dies wiederholt sich, bis alle Seiten der Vorlage übertragen wurden.

Es kann auch jedes andere von der Faksimilebaugruppe FAX gesendete oder empfangene Steuersignal detektiert werden, um zu erkennen, daß die nun zwischen schnurlosem Faksimilegerät und Basisstation ausgetauschten Daten nicht durch die Faksimilebaugruppe FAX ausgegeben werden.

## Patentansprüche

1. Verfahren zur schnurlosen Bild- und Textdatenkommunikation, bei dem einer Basisstation, welche an ein Kommunikationsnetz angeschlossen ist, mindestens ein Teilnehmerendgerät durch eine Kennung zugeordnet wird, wobei die Kennung durch eine Inband-Kennungsübertragung zwischen Teilnehmerendgerät und Basisstation übertragen wird,
**dadurch gekennzeichnet,**
daß das Teilnehmerendgerät eine schnurlose Bild- und Textdatenkommunikation durchführt, daß die Inband-Kennungsübertragung während einer Nachrichtenübertragung in bestimmten Zeitabständen erfolgt, daß eine Nachrichtenübertragung nur fortgesetzt wird, wenn der Kennungsaustausch erfolgreich durchgeführt wurde und daß der Kennungsaustausch im wesentlichen gleichzeitig mit dem Austausch von Steuerdaten über das Kommunikationsnetz erfolgt.

2. Verfahren nach Anspruch 1,
**dadurch gekennzeichnet,**
daß nachdem ein Steuersignal detektiert wurde, das schnurlose Faksimilegerät den normalen Betrieb unterbricht und einen Kennungsaustausch mit der Basisstation durchführt, daß die Basisstation nach Empfang eines Steuersignals ebenfalls den normalen Betrieb unterbricht und einen Kennungsaustausch mit dem schnurlosen Faksimilegerät durchführt, daß nach einem korrekten Kennunsaustausch der normale Betrieb von der Basisstation und vom schnurlosen Faksimilegerät fortgesetzt wird.

3. Verfahren nach Anspruch 1 oder 2,
**dadurch gekennzeichnet,**
daß ein erstes Steuersignal ein Seiten-Ende-Signal ist, wodurch der Kennungsaustausch nach dem Seiten-Ende-Signal und vor einem zweiten Steuersignal, das ein Seiten-Anfangs-Signal ist, erfolgt.

4. Verfahren nach einem der Ansprüche 1 bis 3,
**dadurch gekennzeichnet,**
daß die Übertragung von Signalen über die Funkschnittstelle (FU) gemäß dem CT1, CT1+ oder DECT-Standard erfolgt.

5. Schnurloses Faksimilegerät zur Durchführung des Verfahrens nach einem der Ansprüche 1 bis 4,
**dadurch gekennzeichnet,**
daß das Faksimilegerät eine Steuereinheit (ST) aufweist, welche mit einem Speicher (SP) für eine Kennung; mit einer Faksimilebaugruppe (FAX) zum Einlesen von Bild- oder Textvorlagen und mit einer Funkschnittstelle (FU) zur bidirektionalen Funkübertragung von Signalen für schnurlose Telefone verbunden ist und daß die Steuereinheit (ST) einen Detektor für Steuersignale aufweist.

6. Schnurloses Faksimilegerät nach Anspruch 5.
**dadurch gekennzeichnet,**
daß die Steuereinheit (ST) einen Detektor für das Seiten-Ende Signal aufweist.

## Claims

1. Method for cordless image-data and text-data communication, in which at least one subscriber terminal appliance is assigned by an identifier to a base station which is connected to a communication network, the identifier being transmitted by an in-band identification transmission between subscriber terminal appliance and base station, characterized in that the subscriber terminal appliance performs a cordless image-data and text-data communication, in that the in-band identification transmission takes place during a communication transmission at certain time intervals, in that a communication transmission is only continued if the identifier exchange has been successfully performed, and in that the identifier exchange takes place substantially at the same time as the exchange of control data via the communication network.

2. Method according to Claim 1, characterized in that, after a control signal has been detected, the cordless facsimile machine interrupts the normal operation and performs an identifier exchange with the base station, in that, after receiving a control signal, the base station likewise interrupts the normal operation and performs an identifier exchange with the cordless facsimile machine, and in that, after a correct identifier exchange, the normal operation is continued by the base station and by the cordless facsimile machine.

3. Method according to Claim 1 or 2, characterized in that a first control signal is a page-end signal, as a result of which the identifier exchange takes place after the page-end signal and prior to a second control signal, which is a page-start signal.

4. Method according to one of Claims 1 to 3, characterized in that the transmission of signals via the radio interface (FU) takes place in accordance with the CT1, CT1+ or DECT standard.

5. Cordless facsimile machine for performing the method according to one of Claims 1 to 4, characterized in that the facsimile machine has a control unit (ST) which is connected to a memory (SP) for an identifier, to a facsimile assembly (FAX) for reading in image documents or text documents and to a radio interface (FU) for the bidirectional radio transmission of signals for cordless telephones and in that the control unit (ST) has a control-signal detector.

6. Cordless facsimile machine according to Claim 5, characterized in that the control unit (ST) has a page-end-signal detector.

## Revendications

1. Procédé de communication sans fil de données d'images et de textes, selon lequel au moins un terminal d'abonné est associé, au moyen d'un indicatif, à un poste de base, qui est raccordé à un réseau de communication, l'indicatif étant transmis lors d'une transmission d'indicatif dans la bande entre le terminal d'abonné et le poste de base, caractérisé en ce
que le terminal d'abonné exécute une communication sans fil de données d'images et de textes, que la transmission de l'indicatif dans la bande s'effectue pendant une transmission d'informations au cours d'intervalles de temps déterminés, qu'une transmission d'informations ne se poursuit que lorsque l'échange de l'indicatif s'est effectué avec succès et que l'échange d'indicatif s'effectue sensiblement en même temps que l'échange de données de commande par l'intermédiaire du réseau de communication.

2. Procédé selon la revendication 1,
caractérisé en ce
qu'après la détection d'un signal de commande, l'appareil de télécopie sans fil interrompt le fonctionnement normal et exécute un échange de l'indicatif avec le poste de base, qu'après la réception d'un signal de commande, le poste de base interrompt également le fonctionnement normal et exécute un échange d'indicatifs avec l'appareil de télécopie sans fil, et qu'après un échange correct de l'indicatif, le fonctionnement normal du poste de base et de l'appareil de télécopie sans fil se poursuit.

3. Procédé selon la revendication 1 ou 2,
caractérisé en ce
qu'un premier signal de commande est un signal de fin de page, ce qui a pour effet que l'échange de l'indicatif s'effectue après le signal d'extrémité latérale et avant un second signal de commande, qui est un signal de début de page.

4. Procédé selon l'une des revendications 1 à 3,
caractérisé en ce
que la transmission de signaux s'effectue par l'intermédiaire d'une interface hertzienne (FU) conformément à la norme CT1, CT1+ ou DECT.

5. Appareil de télécopie sans fil pour la mise en oeuvre du procédé selon l'une des revendications 1 à 4,
caractérisé en ce
que l'appareil de télécopie comporte une unité de commande (ST), qui est reliée à une mémoire (SP) pour un indicatif; un module de télécopie (FAX) pour l'introduction d'originaux d'images ou de textes, et une interface hertzienne (FU) pour la transmission bidirectionnelle de signaux pour des téléphones sans fil, et que l'unité de commande (ST) comporte un détecteur pour des signaux de commande.

6. Appareil de télécopie sans fil selon la revendication 5,
caractérisé en ce
que l'unité de commande (ST) comporte un détecteur pour le signal de fin de page.
